# EUROPÄISCHE PATENTSCHRIFT

(11) **EP 0 210 700 B1**
(45) Veröffentlichungstag und Bekanntmachung des Hinweises auf die Patenterteilung: **15.06.1994**
(21) Anmeldenummer: 86201269.7
(22) Anmeldetag: 21.07.1986
(51) Int. Cl.: H04Q 7/04, H04J 3/12, H04B 7/26

(54) **Digitales Funkübertragungssystem mit zentralem, verbindungsbegleitendem Organisationskanal im Zeitmultiplexrahmen**
Digital radio transmission system with central, communication-associated organization channel in the time multiplex frame
Système de radio-transmission numérique avec canal de service central associé à la communication dans la trame multiplexée dans le temps

(30) Priorität: 31.07.1985 DE 3527330
(43) Veröffentlichungstag der Anmeldung: 04.02.1987
(73) Patentinhaber: Philips Patentverwaltung GmbH, 22335 Hamburg (DE); Philips Electronics N.V., 5621 BA Eindhoven (NL)
(72) Erfinder: Eizenhöfer, Alfons, Dr. Ing., D-8503 Altdorf (DE)
(74) Vertreter: Peuckert, Hermann, Dipl.-Ing.

(56) Entgegenhaltungen:
- EP-A- 0 196 723
- FR-A- 2 376 570
- IEEE INTERNATIONAL CONFERENCE ON COMMUNICATIONS, Amsterdam, 14.-17. Mai 1984, Band 3, Seiten 1192-1198, IEEE/Elsevier Science Publishers B.V. (North-Holland), Amsterdam, NL; H. Pfannschmidt et al.: "MATS-E - a cellular mobile automatic telephone system"
- IEEE TRANSACTION ON VEHICULAR TECHNOLOGY, Band VT-31, Nr. 4, November 1982, Seiten 153-157, IEEE, New York, US; K. KINOSHITA et al.: "Digital mobile telephone system using TD/FDMA scheme"
- REVIEW OF THE ELECTRICAL COMMUNICATION LABORATORIES, Band 30, Nr. 1, Januar 1982, Seiten 143-149, Tokyo, JP; H. INABA et al.: "System description on 800MHz land mobile telephone communication with all digital radio control scheme"
- IEEE INTERNATIONAL CONFERENCE ON COMMUNICATIONS '86, Toronto, 22.-25. Juni 1986, Band 1, Seiten 83-89, IEEE, New York, US; W. FUHRMANN et al.:"Standardization of an european digital mobile radiocommunication system"

## Beschreibung

Die Erfindung betrifft ein digitales Funkübertragungssystem gemäß dem Oberbegriff des Patentanspruchs 1.

Zur Nachrichtenübertragung über ein von einer Vielzahl von Teilnehmern gemeinsam benutztes Übertragungsmedium (z.B. Leitung, Funkstrecke) sind drei Grundverfahren bekannt, nämlich das Codemultiplex-Verfahren, das Frequenzmultiplex-Verfahren und das Zeitmultiplex-Verfahren.

Beim Codemultiplex-Verfahren werden beispielsweise die verschiedenen, über ein gemeinsames Übertragungsmedium geführten Nachrichten durch Basis-Modulation einem Träger aufmoduliert und das sich ergebende im Vergleich zur Kanalbandbreite schmalbandige Signal wird durch Multiplex-Modulation mit Hilfe eines den Empfänger kennzeichnenden Codeworts auf die Kanalbandbreite spektral gespreizt.

Die Erkennung des Signals erfolgt nicht durch zeitliche oder frequenzmäßige Selektion, sondern anhand der spektralen Codierung. Die im codemultiplex-Kanal überlagerte Vielzahl von spektralcodierten Nachrichten werden im Empfänger anhand des diesem zugeordneten Codeworts selektiert.

Beim Frequenzmultiplex-Verfahren wird die zur Nachrichtenübertragung zur Verfügung stehende Gesamtbandbreite in schmale Frequenzbänder unterteilt, welche jeweils einem Nachrichtenübertragungskanal entsprechen. Für die Dauer der Funkübertragung steht dem Teilnehmer ein solches schmales Frequenzband zur Verfügung.

Beim Zeitmultiplex-Verfahren steht jedem Teilnehmer die gesamte Bandbreite eines einzigen Funkkanals zur Verfügung, welchen der Teilnehmer aber nur für kurze Zeitabschnitte benutzen darf. Die Zeichen oder Zeichenfolgen verschiedener Teilnehmer sind ineinander verschachtelt und werden mit entsprechend höherer Bitrate im einzigen Funkkanal übertragen, wobei der jeweils einem Teilnehmer zugeordnete Zeitkanal sich periodisch mit der Rahmenperiodendauer wiederholt.

Aus der DE-OS 25 37 683 ist ein Funkübertragungssystem mit ortsfesten Funkstationen und beweglichen Funkstationen bekannt, bei welchen verschiedene Kanalzugriffsverfahren mit asynchronem Zeitmultiplex, mit Codemultiplex und mit Frequenzmultiplex verwendet werden.

Auch Kombinationen der vorgenannten Verfahren und deren Anwendung in einem digitalen Funkübertragungssystem sind bekannt. Beispielsweise ist in "Nachrichtentechnik, Elektronik + Telematic 38 (1984), Heft 7, Seiten 264 bis 268" ein digitales Funkübertragungssystem beschrieben, bei dem das Zeitmultiplex-Verfahren in Kombination mit Codespreizung verwendet wird, wobei jedoch keine Trennung verschiedener Teilnehmer unter Anwendung des Codemultiplexverfahrens erfolgt. In den Zeitkanälen zur Sprach- und/oder Datenübertragung (Kommunikationskanal TCH) werden nacheinander eine Bit-Folge zur Ermittlung des Bit-Takts (Synchron), ein Rahmen-Synchronisationswort (Vor spann) und die Bit-Folge der Nachricht selbst übertragen. Die Zeitkanäle zur Nachrichtenübertragung (3x20 TCH) sind mit Organisationskanälen (3 CCH) zu einem Zeitmultiplexrahmen mit der Zeitdauer 31,5 msec. angeordnet. Soll als Nachricht das Sprachsignal übertragen werden, so kann zur Analog-/Digitalwandlung die adaptive Deltamodulation verwendet werden. Die dabei entstehenden Nachrichtenzeichen (Bit) werden im Sender mit einem Code überlagert. Es hat sich als vorteilhaft erwiesen, die einzelnen Nachrichtenzeichen in Blöcke zu je vier Bit zusammen zu fassen und die so entstehenden Blöcke mit einem orthogonalen Alphabet zu spreizen. Der dabei verwendete Spreizfaktor ist ein Kompromiß, um die Vorteile der Bandspreizung mit der Forderung nach Frequenzökonomie miteinander zu vereinigen.

Wie aus den vorstehenden Ausführungen hervorgeht, wird bei Funkübertragungssystemen, insbesondere bei automatischen Mobilfunksystemen, meist eine von zwei Formen von Organisationskanälen benutzt. Die erste Form betrifft einen zentralen Organisationskanal, welcher auch häufig nur als zentraler Rufkanal ausgeführt ist, und die zweite Form betrifft einen verbindungsbegleitenden Organisationskanal.

In einem Funkübertragungssystem mit Funkübertragungskanäle über welche Sprache und Daten übertragen werden, ist es zur Organisation des Funkübertragungskanals notwendig, zwischen beweglichen Funkstationen und ortsfesten Funkstationen Informationen auszutauschen. Weitere Informationen, welche über den Funkübertragungskanal ausgetauscht werden, sind beispielsweise Informationen um eine bewegliche Funkstation zu suchen, der Vorgang der Identifizierung, das Durchführen eines Kanalauswahlverfahrens usw. Ein solcher Organisationskanal dient vor allem der Durchführung des Verbindungsaufbaus und ist je nach Funkübertragungssystem vollständig oder nur teilweise als zentraler Organisationskanal ausgeführt. Auch während einer bestehenden Verbindung zwischen Teilnehmern des öffentlichen fernsprechnetzes oder des Funkübertragungssystems ist es häufig notwendig, Informationen zur Organisation des Funkübertragungskanals auszutauschen. Solche Informationen betreffen beispielsweise die Form in welcher der Verbindungsabbau durchgeführt werden soll, Zustandsinformationen den Funkübertragungskanal selbst betreffend, Funkmeldungen für eine Leistungsregelung der Sender des Funkübertragungssystems, das Weiterreichen der Funkverbindung bei Funkzellenwechsel an eine benachbarte ortsfeste Funkstation usw.

Der vorgenannte Informationsaustausch erfolgt über einen sogenannten verbindungsbegleitenden Organisationskanal, welcher dem Funkübertragungskanal selbst zugeordnet ist. Bei analogen Funkübertragungssystemen wird der Organisationskanal häufig in Form einer Außerbandsignalisierung übertragen oder es wird eine Verschachtelung mit der zu übertragenden Nutzinformation,unter Anwendung des Zeitmultiplexverfahrens oder eines geeigneten Kanalcodierverfahrens, vorgenommen.

Die Ausführungsform mit Außerbandsignalisierung hat den Nachteil, daß die Signalisierungsinformation der Nutzinformation im Sender aufgeprägt werden muß, beispielsweise durch Modulation oder geeignete Codierung, und im Empfänger wieder eine Trennung zwischen Nutz- und Signalisierungsinformation vorgenommen werden muß. Darüber hinaus muß auch die Kanalkapazität für den verbindungsbegleitenden Organisationskanal ständig bereit gehalten werden, auch wenn im Augenblick diese Kanalkapazität nicht vollständig genutzt werden kann.

Wird eine Verschachtelung von Signalisierungs- und Nutzinformation im Zeitmultiplexrahmen vorgenommen, ähnlich wie bei der Bildung der Mehrfachrahmen in einem PCM30-Übertragungssystem, so muß ebenfalls die Kanalkapazität für die Signalisierungsinformation bereit gehalten werden, auch wenn diese Kanalkapazität augenblichklich nicht genutzt werden kann.

Der Erfindung liegt die Aufgabe zugrunde, in einem digitalen Funkübertragungssystem, bei dem im gemeinsamen Funkübertragungskanal die Signalisierungs- und Nutzinformation nach dem Zeitmultiplexverfahren übertragen werden, deren Trennung auf einfache Art und Weise durchzuführen, die Kanalkapazität für die verbindungsbegleitenden Organisationskanäle so klein wie möglich zu halten, um priorisierte Meldungen von den ortsfesten Funkstationen zu den beweglichen Funkstationen schneller übertragen zu können.

Diese Aufgabe wird erfindungsgemäß bei einem digitalen Funkübertragungssystem mit den Merkmalen des Patentanspruchs 1 gelöst.

Das erfindungsgemäße digitale Funkübertragungssystem mit einem zentralen, verbindungsbegleitenden Organisationskanal im Zeitmultiplexrahmen weist den Vorteil auf, daß durch die Einrichtung des zentralen verbindungsbegleitenden Organisationskanals ein Bündelungseffekt erzielt wird, d.h. der zentrale verbindungsbegleitende Organisationskanal benötigt weniger Bandbreite als die Summe der einzelnen verbindungsbegleitenden Organisationskanäle. Weiterhin ist von Vorteil, daß die Trennung von Signalisierung- und Nutzinformation einfach vorzunehmen ist und daß die Übertragungszeit, durch die größere Bandbreite des zentralen verbindungsbegleitenden Organisationskanals im Vergleich zu der Bandbreite eines einzelnen verbindungsbegleitenden Organisationskanals kleiner ist. Dadurch können Funkmeldungen mit hoher Priorität (z.B. beim Weiterreichen infolge eines Funkzellenwechsels) schneller übertragen werden.

Das erfindungsgemäße digitale Funkübertragungssystem wird im folgenden anhand in der Zeichnung dargestellter Ausführungsformen näher beschrieben und erläutert. Es zeigt:
- Fig. 1: die Einteilung des Zeitmultiplexrahmens,
- Fig. 2: die Multiplexbildung innerhalb der Funkzellen,
- Fig. 3: das Blockschaltbild des Sendeteils der ortsfesten Funkstation und
- Fig. 4: das Blockschaltbild des Empfangsteils in der beweglichen Funkstation.

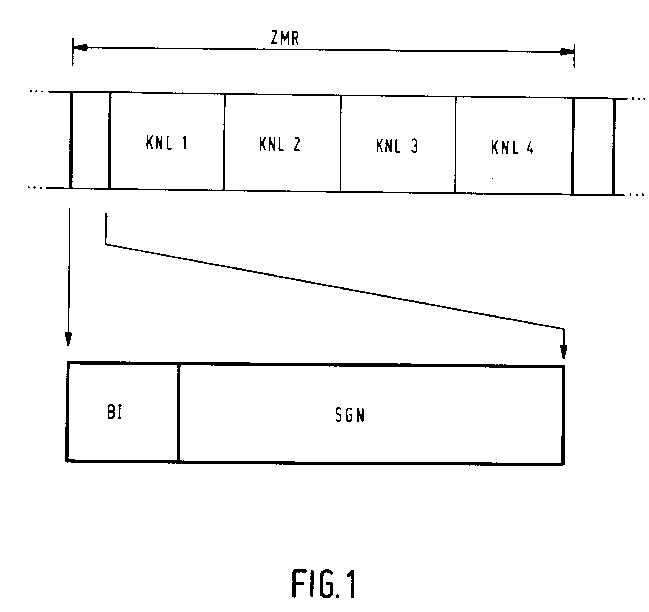

Der in Fig. 1 dargestellte Zeitmultiplexrahmen enthält einen Signalisierungszeitschlitz und vier Zeitschlitze für die Übertragung von Nutzinformationen der jeweiligen diesem Zeitmultiplexrahmen zugeordneten Teilnehmer. In diesen Zeitkanälen 1 bis 4 kann beispielsweise codierte Sprache oder Daten übertragen werden. Daneban kann einer dieser Zeitkanäle 1 bis 4 auch als zentraler Organisationskanal verwendet werden. Im Signalisierungszeitschlitz, welcher am Anfang des Zeitmultiplexrahmens angeordnet ist, wird in einem zentralen, verbindungsbegleitenden Organisationskanal die Information der einzelnen verbindungsbegleitenden Organisationskanäle übertragen.

Der Unterschied zwischen dem vorgenannten und in einem der Zeitkanäle 1 bis 4 übertragenen zentralen Organisationskanal und dem verbindungsbegleitenden Organisationskanal besteht darin, daß der zentrale Organisationskanal für alle Teilnehmer oder für eine bestimmte Teilnehmerpopulation in einer Funkzelle des Funkübertragungssystems zur Verfügung steht, während der zentrale, verbindungsbegleitende Organisationskanal nur allen diesem Zeitmultiplexrahmen zugeordneten Teilnehmern zur Verfügung steht, wobei die Teilnehmerpopulation keine Rolle mehr spielt.

Der Empfänger in der beweglichen Funkstation MS empfängt den zentralen, verbindungsbegleitenden Organisationskanal und einen dieser zugeordneten Zeitschlitz. Um die in einem Zeitmultiplexrahmen zusammengefaßten Zeitkanäle verschiedener Teilnehmer voneinander unterscheiden zu können, wird neben der aktuellen Signalisierungsinformation auch eine Benutzeridentifikation übertragen.

Die Übertragung des zentralen verbindungsbegleitenden Organisationskanals kann in Funkübertragungssystemen sowohl unsymmetrisch als auch symmetrisch erfolgen. Unter unsymmetrischer Übertragung soll verstanden werden, daß in den beiden Übertragungsrichtungen für die Bündelung von Nachrichtenkanälen unterschiedliche Kombinationen von Multiplexverfahren angewandt werden, während bei symmetrischer Übertragung gleiche Kombinationen von Multiplexverfahren angewandt werden. Bei unsymmetrischer Übertragung stehen individuelle verbindungsbegleitende Organisationskanäle in der Richtung von den beweglichen Funkstationen MS zu der ortsfesten Funkstation BS zur Verfügung, während bei der symmetrischen Übertragung in beiden Richtungen der gleiche verbindungsbegleitende Organisationskanal verwendet wird.

In der Richtung von der ortsfesten Funkstation BS zu den dieser zugeordneten beweglichen funkstationen MS ist es bei symmetrischer Übertragung notwendig, den Zugriff auf den Rückkanal (von den beweglichen Funkstationen MS zur ortsfesten Funkstation BS) zu organisieren um Kollisionen zu vermeiden. Dies ist bei einer unsymmetrischen Übertragung nicht notwendig.

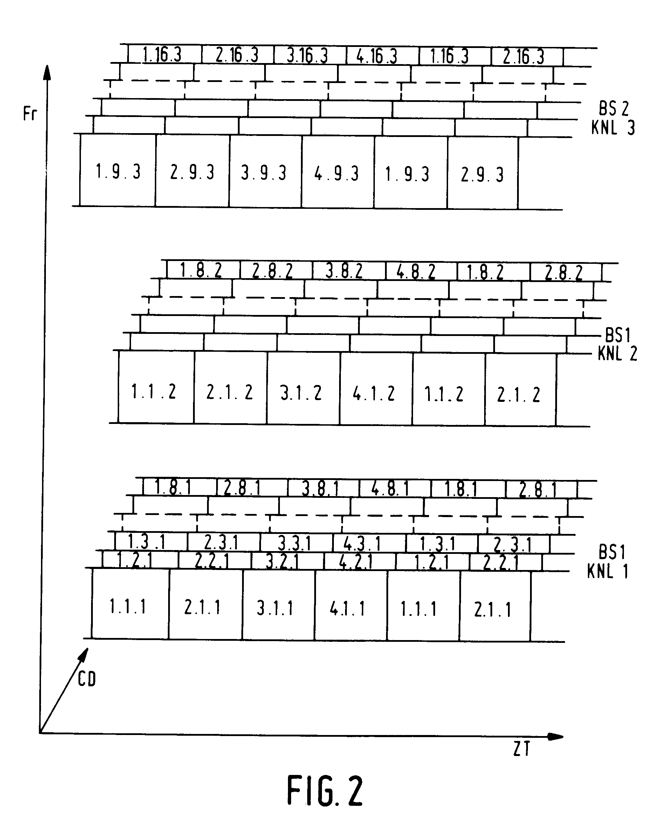

Anhand der Fig. 2 bis 4 wird eine Ausführungsform eines digitalen Funkübertragungssystems näher beschrieben und erläutert, bei dem für die Bündelung der Nachrichtenkanäle unterschiedliche Kombinationen von Multiplexverfahren angewandt werden. Die zu sendende Nachricht wird in der Übertragungsrichtung von der ortsfesten Funkstation BS zu den beweglichen Funkstationen MS in die Nachrichtenkanäle unter Anwendung der Kombination von Codemultiplex-, Zeitmultiplex- und Frequenzmultiplexverfahren eingefügt. Für die Übertragungsrichtung von der beweglichen Funkstation MS zur ortsfesten Funkstation BS kann beispielsweise die Nachrichtenübertragung in voneinander getrennten, schmalbandigen Frequenzkanälen erfolgen.

Im digitalen Funkübertragungssystem sind ortsfeste Funkstationen BS räumlich nach einem Zellensystem angeordnet. Jeder ortsfesten Funkstation BS sind eine Anzahl von Funkübertragungskanälen zugeordnet, über welche Nachrichten zu beweglichen Funkstationen MS übertragen werden.

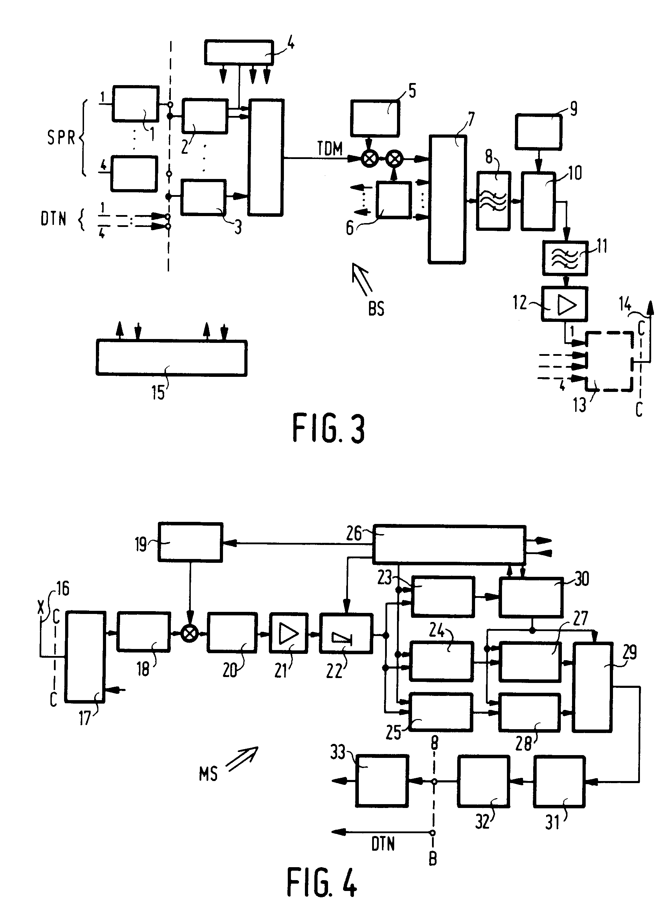

In den beiden Übertragungsrichtungen werden für die Bündelung von Nachrichtenkanälen unterschiedliche Kombinationen von Multiplexverfahren angewandt. In der Übertragungsrichtung von der ortsfesten Funkstation BS zu den beweglichen Funkstationen MS wird die zu sendende Nachricht (Sprache oder Daten) in die Nachrichtenkanäle unter Anwendung von Codemultiplex-, Zeitmultiplex- und Frequenzmultiplexverfahren eingefügt. Hierzu sind in der ortsfesten Funkstation BS unter anderem ein TDM-Multiplexer 3, ein Codewortgenerator 5 und ein Synthesizer 9 angeordnet (vgl. Fig. 3). In der beweglichen Funkstation MS erfolgt die Trennung der Nachrichtenkanäle des empfangenen Digitalsignals unter Anwendung des Codemultiplex-, Zeitmultiplex- und Frequenzmultiplexverfahrens. Hierzu sind in der beweglichen Funkstation MS unter anderem ein Synthesizer 19, Korrelatoren 24 und 25 und ein TDM-Demultiplexer 31 (vgl. Fig. 4) vorgesehen. Für die Übertragungsrichtung von den beweglichen Funkstationen MS zur ortsfesten Funkstation BS erfolgt die Nachrichtenübertragung in voneinander getrennten, schmalbandigen Frequenzkanälen. Im folgenden wird die Multiplexbildung für die Übertragungsrichtung von der ortsfesten Funkstation BS zu den beweglichen Funkstationen MS näher beschrieben und erläutert.

Eine ortsfeste Funkstation BS weist beispielsweise mindestens einen Kanalsatz, bestehend aus 32 Nachrichtenkanälen, auf. Die einzelnen Nachrichtenkanäle für die verschiedenen beweglichen Funkstationen MS in einem Kanalsatz sind durch verschiedene Spreizcodewörter (CDMA) und/oder verschiedene Zeitschlitze (TDMA) voneinander getrennt. In Fig. 2 sind drei solcher Kanalsätze dargestellt, wobei in dem gezeigten Beispiel Kanalsätze 1 und 2 zur gleichen Funkzelle und Kanalsatz 3 zu einer benachbarten Funkzelle gehören. Die Kennzeichnung der einzelnen Nachrichtenkanäle (Kanalkennung) ist in Fig. 2 durch die Zahlenfolge mit drei Ziffern verdeutlicht. Dabei bedeutet die erste Ziffer die Nummer des jeweiligen Zeitschlitzes,die zweite Ziffer das jeweils verwendete Codewort und die dritte Ziffer die jeweilige Nummer der verwendeten Trägerfrequenz. Die Bündelung der Nachrichtenkanäle in der Übertragungsrichtung von der ortsfesten Funkstation BS zu den beweglichen Funkstationen MS erfolgt durch die Aufeinanderfolge des Zeitmultiplex-, Codemultiplex- und schließlich Frequenzmultiplexverfahrens. Diese bevorzugte Aufeinanderfolge erleichtert die Realisierung der Sende-und Empfangseinrichtungen des digitalen Funkübertragungssystems.

Der Aufbau eines Kanalsatzes erfolgt z.B. dadurch, daß mehrere Zeitschlitze, von denen jeder die Information für jeweils einen Teilnehmer beinhaltet, zu einem Zeitmultiplexrahmen zusammengefaßt werden. In Fig. 2 umfaßt der Zeitmultiplexrahmen vier Zeitschlitze, z.B. Nachrichtenkanal 1.1.1 bis 4.1.1. Der Zeitmultiplexrahmen besteht beispielsweise aus 800 Symbolen und hat eine Periodendauer von 20 msec. Davon sind 20 Synchronisationssymbole in regelmäßigen Abständen über den Rahmen verteilt. Für den verbindungsbegleitenden Organisationskanal sind eine Anzahl von Symbolen, vorzugsweise am Rahmenanfang angeordnet, vorgesehen. Die Synchronisationsbits und Bits des verbindungsbegleitenden Organisationskanal sind in Fig. 2 nicht eingezeichnet. In der Regel ist der Zeitmultiplexrahmen mit vier Sprechkanälen zu je 16 kbits Nutzbitrate und 3 kbits Redundanz belegt. Die einzigen Festlegungen, die im digitalen Funkübertragungssystem für die Bildung des Zeitmultiplexrahmens getroffen werden müssen, ist die Rahmenlänge und die Lage eines zentralen Organisationskanals im Zeitmultiplexrahmen.

Anschließend wird die Information solcher Zeitmultiplexrahmen mit geeignet gewählten Codewörtern gespreizt, welche es erlauben, mehrere Zeitmultiplexrahmen gleich zeitig und mit derselben Trägerfrequenz zu übertragen. Dabei erfolgt die Spreizung jedes dieser Zeitmultiplexrahmen mit einem Codewort, welches in diesem Kanalsatz nur diesem Speziellen Zeitmultiplexrahmen zugeordnet ist.Das bedeutet zum einen, daß innerhalb eines Kanalsatzes jeder Zeitmultiplexrahmen für die Spreizung ein für ihn spezifisches und von den anderen Zeitmultiplexrahmen unterschiedliches Codewort enthält und zum anderen, daß die Information in den Zeitschlitzen eines Zeitmultiplexrahmens mit dem gleichen Codewort gespreizt wird.

Bei der in Fig. 2 dargestellten Ausführungsform werden acht verschiedene Codewörter pro Kanalsatz verwendet, d.h. ein Kanalsatz enthält acht verschieden Zeitmultiplexrahmen mit jeweils vier Zeitkanälen, zusammen also 32 Nachrichtenkanäle pro Kanalsatz.

Durch die Vergabe von ausgesuchten Codesymbolen für die Spreizung, wie z.B. pseudozufällige, orthogonale oder quasiorthogonale Codewörter, ist die gleichzeitige Übertragung von Nachrichten im Codemultiplex möglich. Die acht individuellen Spreizcodes weisen eine Spreizung von 31, d.h. eine Länge von 31 Chips, auf. Dabei werden alle Codemultiplex-Kanäle von dem Sender der ortsfesten Funkstation BS mit gleicher Leistung und zeitsynchron gesendet. Durch die Verwendung von vier Symbolen in jedem Codemultiplex-Kanal (die vier Symbole lassen sich z.B. durch zwei antipodale Codewörter darstellen) lassen sich zwei Bit des Nutzsignals zu einem Symbol zusammenfassen. Dadurch verringert sich die Symbolrate gegenüber der Bitrate des Basisband um die Hälfte. Für die Codierung des Basisbandsignals und der Synchronisierung stehen sechs verschiedene Symbole zur Verfügung, von denen zwei ausschließlich für die Synchronisation verwendet werden. Werden acht individuelle Spreizcodeebenen mit vier zeitlich gestaffelten Kanälen gebildet, so können 32 Nachrichtenkanäle von beispielsweise 16 kbit/s übertragen werden, welche nach Codespreizung einem gemeinsamen HF-Träger aufmoduliert werden. Bei Anwendung einer 4-Phasenmodulation ergibt sich für die Übertragung von 32 Nachrichtenkanälen z.B. eine Bandbreite von 1,25 MHz. Die Zeitstaffelung und damit die Zahl der Nachrichtenkanäle pro Spreizcodeebene hängt von der für jeden Nachrichtenübertragungskanal benötigten Bitrate ab.

Wegen der Zusammenfassung von je zwei Bit zu einem von vier möglichen Symbolen bleibt einerseits die Symboldauer mit 25 »s genügend lang um Intersymbolinterferenzen, die durch Mehrwegeempfang entstehen, zu vermeiden und andererseits ist der Aufwand in den Empfangseinrichtungen für die Korrelatoren niedrig. Die innerhalb einer ortsfesten Funkstation BS zur Trennung der Codeebenen benutzten 16 Spreizcodes sind beispielsweise paarweise orthogonal, während in verschiedenen ortsfesten Funkstationen BS mit gleichem Träger, die unterschiedlichen Synchronisiersymbole möglichst geringe Kreuzkorrelationsprodukte aufweisen sollen, bei beliebigen zeitlichen Verschiebungen.

Für die Spreizung können z.B. Gold-Codes verwendet werden. Eine Änderung des Spreizcodes hat nur geringen Einfluß auf die Empfangseinrichtung, da diese programmierbare Korrelatoren aufweist, welche von Verbindung zu Verbindung auf Anweisung der ortsfesten Funkstation BS neu eingestellt werden. Für die Übertragung solcher Einstellinformationen und zur Trennung der einzelnen Zeitkanäle (Nachrichtenkanäle) im Zeitmultiplexrahmen kann ein gemeinsamer Organisationskanal, in dem zentraler Organisationskanal und verbindungsbegleitende Organisationskanäle zusammengefaßt sind, vorgesehen sein.

Wie bereits ausgeführt, werden die Zeitmultiplexrahmen eines Kanalsatzes im Sender der ortsfesten Funkstation BS einander überlagert, gemeinsam verstärkt und auf einem HF-Träger über eine Antenne abgestrahlt. Im Empfänger der beweglichen Funkstation MS wird das empfangene Digitalsignal ins Basisband gemischt. Dann wird in dem dieser beweglichen Funkstation beim Verbindungsaufbau zugewiesenen Zeitschlitz, die Information durch Korrelation mit dem für diesen Nachrichtenkanal verwendeteten Codewort, das der beweglichen Funkstation ebenfalls beim Verbindungsaufbau mitgeteilt wird, zurückgewonnen. Im Empfänger der beweglichen Funkstation MS erfolgt also die Trennung der Nachrichtenkanäle des empfangenen Digitalsignals in umgekehrter Abfolge, d.h. Demultiplexen bezüglich Frequenz, Code und Zeit, wie bei der Bündelung der Nachrichtenkanäle in der ortsfesten Funkstation BS. Bei einer Rahmenlänge von z.B. 20ms für den Zeitmultiplexrahmen, einer Symboldauer des Spreizcodeworts von 25 »s und einer Spreizung von 31 liegt die Chipdauer bei 0,806 ns und die Chiprate bei 1,24 Mcps. Damit ist auch die Chipdauer klein genug um eine hinreichende Auflösung und Ausnutzung der Mehrwege zu erlauben und Fading-Einflüsse weitgehend zu vermeiden.

Wie bereits ausgeführt, ist pro Kanalsatz mindestens ein gemeinsamer Organisationskanal vorgesehen, auf dem die beweglichen Funkstationen MS zum Verbindungsaufbau zugreifen und über den der Verbindungsaufbau und einige Sonderdienste abgewickelt werden. Die beweglichen Funkstationen MS kennen die Frequenzlage der möglichen Kanalsätze, den entsprechenden Zeitkanal und die Codewörter für die innerhalb des digitalen Funkübertragungssystem vergebenen Organisationskanäle. Mit dieser Kenntnis kann die bewegliche Funkstation MS den für diese geeigneten Organisationskanal suchen und dort alle für den Zugriff (z.B. Frequenz der Schmalband-(Rück-)Richtung von beweglicher Funkstation MS zur ortsfesten Funkstation BS des jeweiligen Organisationskanals) und für den Verbindungsaufbau (z.B. Zeitkanal und Codewort für die Richtung von der ortsfesten Funkstation BS zur beweglichen Funkstation MS, sowie die Frequenz für die Schamlbandrichtung von der beweglichen Funkstation MS zu der ortsfesten Funkstation BS) benötigten Informationen empfangen.

Werden in einer ortsfesten Funkstation BS mehr als 32 Nachrichtenkanäle benötigt, so können mehrere Kanalsätze unter Anwendung des Frequenzmultiplexverfahrens einander überlagert werden. Die verschiedenen Kanalsätze werden mit unterschiedlichen HF-Trägerfrequenzen abgestrahlt. In Fig. 2 sind der ortsfesten Funkstation BS1 die Kanalsätze 1 und 2 zugeordnet. Für die beiden der ortsfesten Funkstation BS1 zugeordneten Kanalsätze können, weil sie auf verschiedenen Trägerfrequenzen gesendet werden, die gleichen Codewörter verwendet werden.

Die Trennung der Nachrichtenkanäle von benachbarten ortsfesten Funkstationen BS erfolgt entweder unter Anwendung des Frequenzmultiplexverfahrens (verschiedene HF-Träger für die in diesen ortsfesten Funkstationen BS verwendeten Kanalsätze), unter Anwendung des Codemultiplexverfahrens (verschiedene Codewortsätze bei den verwendeten Kanalsätzen) oder durch Kombinationen dieser beiden Multiplexverfahren. Bei der in Fig. 2 dargestellten Ausführungsform unterscheidet sich der Kanalsatz 3 der ortsfesten Funkstation BS2 von den beiden Kanalsätzen 1 und 2 der ortsfesten Funkstation BS1 sowohl im Codewortsatz (2. Ziffer der Kanalkennung) wie auch durch die verwendete HF-Trägerfrequenz (3. Ziffer der Kanalkennung). In genügend großen räumlichen Abständen (festgelegt durch auftretende gleichkanalstörungen) von einer Zelle zur anderen kann ein in dieser Zelle eingesetzter Kanalsatz (HF-Träger und/oder Codewortsatz) wiederholt werden. Dabei führt die Möglichkeit der Verwendung der gleichen HF-Trägerfrequenz in der entfernten Funkzelle und/oder unterschiedliche Codewortsätze zu benutzen, zu einer zusätzlichen Flexibilität und Freiheit in der reuse-Planung und erleichert die Einführung von Kleinzellenstrukturen.

Für die Übertragungsrichtung von den beweglichen Funkstationen MS zu der ortsfesten Funkstation BS kann beispielsweise eine Schmalbandübertragung mit Frequenzkanälen im 25 KHz-Raster vorgesehen sein. In den Funkzellen selbst ist die Frequenzeinteilung nicht fest, vielmehr werden die Frequenzen von der ortsfesten Funkstelle BS frei vergeben.

Fig. 3 zeigt das Blockschaltbild des Sendeteils der ortsfesten Funkstation BS. Der im Basisband übertragene Daten-/Sprachstrom setzt sich folgendermaßen zusammen. Die digitalisierte Sprache jedes einzelnen Kanals wird zunächst in einem Transcoder 1 von PCM auf das für die Funkübertragung erforderliche Übertragungsverfahren mit entsprechend geringerer Bitrate umcodiert. An der Schnittstelle B-B kann eine Datenquelle angeschlossen werden. In einem mit der Datenquelle bzw. den Transcoder 1 verbundenen Kanalcodierer 2 wird eine spezielle Kanalcodierung zum Schutz signifikanter Bits gegen Übertragungsfehler auf dem Übertragungskanal hinzugefügt. Diese Kanalcodierung kann je nach zu übertragendem Dienst unterschiedlich sein. In einem mit dem Kanalcodierer 2 verbundenen Multiplexer 3 wird in den Datenstrom die verbindungsbegleitende Signalisierung und die von einer Synchronisierschaltung 4 herrührende Synchronisationsinformation hinzugefügt. Das TDM-Signal (Time Division Multiplex-Signal) am Ausgang des TDM-Multiplexers 3 enthält also bei der in Fig. 3 dargestellten Ausführungsform vier Sprach-/Datenkanäle, einen verbindungsbegleitenden Signalisierungskanal (für ein TDM-Kanalbündel) sowie die für die Synchronisation in den Beweglichen Funkstationen MS erforderlichen Synchronisationsbits. Die Synchronisationsbits werden in das TDM-Signal eingeblendet, wie dies in der P 35 11 430.4 vorgeschlagen ist.

Das TDM-Signal am Ausgang des Multiplexers 3 wird mit den jeweiligen von Codegeneratoren 5 erzeugten Codeworten multipliziert, wobei jeweils zwei Bit zu einem Symbol zusammengefaßt und mit dem gewünschten Code gespreizt werden. Der codegenerator 5 ist mit einer Steuereinrichtung 15 verbunden und fügt auf Befehl der Steuereinrichtung 15 Synchronisiersymbole anstelle von Datensymbolen in den am Ausgang des Multiplexers 3 auftretenden kontinuierlichen Datenstrom ein. Auf das gespreizte Signal wird ein den Eigenschaften des Funkübertragungskanals angepaßtes Modulationsverfahren angewandt, beispielsweise wird mit dem gespreizten Signal dann die Phase eines aus einem Oszillator 6 stammenden Trägersignals umgetastet, wodurch ein mit der Information und dem Codewort verknüpftes, bei einer niedrigen Zwischenfrequenz moduliertes BPSK (Binary Phase Shift Keying) Signal entsteht. Das modulierte CDM-Signal wird einem Summierer 7 zugeführt, dessen Ausgang mit einem Bandpaßfilter 8 verbunden ist. Acht dieser modulierten CDM-Signale bilden nach Addition und Bandpaßfilterung ein in der Amplitude mehrstufiges Gesamtsignal, das schließlich auf die Endfrequenz umgesetzt wird.

Hierzu ist als Mischoszillator ein Synthesizer 9 vorgesehen, welcher innerhalb des Frequenzbereichs des digitalen Funkübertragungssystems mit entsprechenden Stufen geschaltet werden kann. Der Synthesizer 9 ist nur für die wenigen möglichen Frequenzen der FDM-Stufe (Frequency Division Multiplex-Stufe) ausgelegt. Die Mischung des CDM-Signals mit der entsprechenden vom Synthesizer 9 gelieferten Frequenz erfolgt in einer Einrichtung 10, welche mit einem Bandpaßfilter 11 verbunden ist. Der Ausgang des Bandpaßfilters 11 ist mit einem Leistungsverstärker 12 verbunden und das herausgefilterte und verstärkte Sendesignal gelangt über einen Senderkoppler 13 zur Antenne 14. Bei kleineren ortsfesten Funkstationen BS mit bis zu 32 Nachrichtenübertragungskanälen entfällt der Senderkoppler 13 völlig.

Die Kanal- und Codegeneratoreinstellung, die richtige Auswahl der Kanalcodierung und die Einfügungen von Meldungen in den Organisationsdatenstrom erfolgt mittels der in der ortsfesten Funkstation BS angeordneten Steuereinrichtung 15. Der ausgewählte Funkübertragungskanal kann dabei ein TDM-Kanal in einer CDM-Ebene sein (vgl. P 35 11 430.4).

Fig. 4 zeigt das Blockschaltbild des Empfangsteils der beweglichen Funkstation MS. Das von einer gemeinsamen Sende-/Empfangsfilter 16 eines Duplexers 17 zur Eingangsstufe 18 des Empfängers. Die Anforderungen an das Empfangsfilter des Duplexers 17 sind relativ gering, so daß sich auch für bewegliche Funkstationen MS mit geringer Dienstanforderung, z.B. einfaches Datenfunkgerät, eine kostengünstige Lösung ergibt. In der Eingangsstufe 18 wird das Signal verstärkt und dann mit einer aus einem Synthesizer 19 stammenden Synthesizerfrequenz auf eine Zwischenfrequenz gemischt.

Das Zwischenfrequenzsignal wird einem ZF-Teil 20 zugeführt, in dem eine weitere Verstärkung und Filterung des Signals vorgenommen wird. Auch für den Synthesizer 19 kann wie für den Synthesizer 9 der ortsfesten Funkstation BS ein einfacher Synthesizer verwendet werden, welcher sich kostengünstig realisieren läßt. Im ZF-Teil 20 sind Filter angeordnet, welche die Nachbarkanalselektion zur Abgrenzung gegen benachbarte Breitbandkanäle bzw. zur Unterdrückung von Mischprodukten dienen. Die eigentliche Rauschfilterung erfolgt in Korrelatoren 23 bis 25. Mit dem ZF-Teil 20 ist eine Amplituden-Regelschaltung 21 verbunden, welche das Ausgangssignal des ZF-Teils 20 auf einen ausreichenden Pegel zur Ansteuerung der nachfolgenden Schaltungen anhebt und eine möglich Übersteuerung dieser Schaltungen verhindert. Die Amplituden-Regelschaltung 21 gleicht unterschiedliche Funkfelddämpfungen und Pegelschwankungen aufgrund von Abschattungen aus, so daß in den nachfolgenden Einrichtungen der beweglichen Funkstation MS eine lineare Verarbeitung durchgeführt werden kann. Die Regelzeitkonstante der Amplituden-Regelschaltung 21 wird im wesentlichen von diesen Abschattungen bestimmt.

Das in der Leistung geregelte ZF-Signal am Ausgang der Amplituden-Regelschaltung 21 wird in einem mit dieser verbundenen Demodulator 22 ins Basisband umgesetzt. Dies kann beispielsweise bei Anwendung einer BPSK-Modulation nach dem Prinzip einer Costasschleife durchgeführt, so daß Frequenz und Phase mit berücksichtige werden. Mehrdeutigkeiten um ganzzahlige Vielfache von 180° können anhand der Polarität der empfangenen Synchronworte (vgl. P 35 11 430.4) erkannt und entsprechend ausgeglichen werden.

Mit dem Demodulator 22 sind drei Korrelatoren 23, 24 und 25 verbunden, welche von einer Steuereinrichtung 26 auf die gerade gültigen Codes 1 und 2 und auf einen in der Funkzone für das gesamte Kanalbündel gültigen Synchroncode eingestellt werden. Mittels der Steuereinrichtung 26 wird der empfangene Organisationsdatenstrom ausgewertet, indem die Daten der von dem Teilnehmer gewünschten Dienste und die Daten für die Geräteart vorgesehenen Funkübertragungskanäle ausgelesen werden, ein im Organisationsdatenstrom als frei ausgewiesener und auch im in der beweglichen Funkstation MS schaltbarer Funkübertragungskanal auswählt wird und anschließend ein Zugriffssignal auf diesem ausgewählten Funkübertragungskanal zur ortsfesten Funkstation BS gesendet wird.

Das Ausgangssignal der Korrelatoren 23 bis 25 wird einerseits zur Ableitung von Symboltakt, Rahmentakt sowie Bittakt verwendet anderseits wird dieses zur Vermessung des augenblicklich gültigen Mehrwegeprofils herangezogen. Da ein einheitlicher Synchroncode mit entsprechend größerem Pegel in dem gesamten Kanalbündel zum gleichen Zeitpunkt abgestrahlt wird (vgl. P 35 11 430.4) ergibt sich eine sichere Synchronisationserkennung und Vermessung des Mehrwegeprofils.

Die Ausgänge der Korrelatoren 24 und 25 sind mit Abtastschaltungen 27, 28 verbunden, welche die Ausgangssignales der Korrelatoren 24 und 25 abtasten und das jeweilige Ergebnis einer Entscheidungsstufe zuführen. Dabei werden die Ergebnisse des synchron zu den Echos der Mehrwegeausbreitung ablaufenden Abtastungen in der Entscheidungsstufe 29 proportional zur Amplitude der Echos (mittels einer Einrichtung 30) gewichtet. Die Entscheidungsstufe 29 hat die Aufgabe, den gesendeten Code und die Polarität des Codes zu schätzen. Der Schätzwert gestattet somit die Auswahl des mit der größten Wahrscheinlichkeit gesendeten Symbols. Nach der Symbol-Bit-Umwandlung in der Entscheidungsstufe 29 wird das Ausgangssignal eine mit der Entscheidungsstufe 29 verbundenen TDM-Demultiplexer 31 zugeführt. Der Demultiplexer 31 ist mit einem Kanal-Decodierer 32 verbunden an dessen Ausgang der gesendete Datenstrom wieder zur Verfügung steht. Bei digitaler Sprachübertragung wird in einem sprachdecoder 33 das digitale Sprachsignal decodiert, einem D/A-Wandler und einem mit diesem verbundenen Lautsprecher zugeführt.

Ist in der beweglichen Funkstation MS beispielsweise die Dienstart Datendienst realisiert, so können die am Ausgang des Kanaldecodieres 32 auftretenden Daten sofort z.B. angezeigt oder ausgedruckt werden.

## Patentansprüche

1. Digitales Funkübertragungssystem mit in einem Zellularnetz angeordneten ortsfesten Funkstationen (BS) und mit einer Vielzahl voneinander unabhängiger beweglicher Funkstationen (MS), wobei die in einem gemeinsamen Funkübertragungskanal übertragenen Nachrichten nach dem Zeitmultiplexverfahren zusammengefaßt werden,
dadurch gekennzeichnet, daß innerhalb des Zeitmultiplexrahmens ein Zeitschlitz für einen zentralen und allen Zeitkanälen dieses Zeitmultiplexrahmens gemeinsamen, verbindungsbegleitenden Organisationskanal für die Übertragung von verbindungsbegleitenden Informationen in der Richtung von der ortsfesten Funkstation (BS) zu den beweglichen Funkstationen (MS) vorgesehen ist.

2. Digitales Funkübertragungssystem nach Anspruch 1,
dadurch gekennzeichnet, daß in dem zentralen, verbindungsbegleitenden Organisationskanal für die Übertragung von verbindungsbegleitenden Informationen in der Richtung von der ortsfesten Funkstation (BS) zu den beweglichen Funkstationen (MS) Funkmeldungen für alle Teilnehmer oder bestimmte Teilnehmerpopulationen des Funkübertragungssystems übertragen werden.

3. Digitales Funkübertragungssystem nach Anspruch 1,
dadurch gekennzeichnet, daß zur Festlegung jenes Zeitkanals des Zeitmultiplexrahmens für welchen die betreffende Signalisierungsinformation im verbindungsbegleitenden Organisationskanal bestimmt ist, neben der Signalisierungsinformation auch eine Benutzeridentifikation übertragen wird.

## Claims

1. Digital radio transmission system comprising base stations (BS) and a multiplicity of mutually independent mobile stations (MS) arranged in a cellular network, the messages transmitted on a common communication channel being grouped according to the time-division multiplex method, characterized in that the time-division multiplex frame comprises a time slot for a central connection-associated organization channel which is used in common by all the time channels of this time-division multiplex frame for the transmission of connection-associated information in the direction from the base station (BS) to the mobile stations (MS).

2. Digital radio transmission system as claimed in Claim 1, characterized in that on the central connection-associated organization channel for the transmission of connection-associated information signals in the direction from the base station (BS) to the mobile stations (MS) radio messages for all the users or for specific user populations of the radio transmission system are transmitted.

3. Digital radio transmission system as claimed in Claim 1, characterized in that to determine for which time channel of the time-division multiplex frame the particular signalling information in the connection-associated organization channel is intended, user identification is transmitted together with the signalling information.

## Revendications

1. Système de radiotransmission numérique comportant des stations radio fixes (BS) disposées en un réseau cellulaire et une pluralité de stations radio mobiles indépendantes les unes des autres (MS), dans lequel les messages transmis par un canal de radiotransmission commun sont rassemblés par multiplexage temporel, caractérisé en ce qu'il est prévu, à l'intérieur de la trame en multiplex temporel, une tranche de temps pour un canal de service central associé à la liaison et commun à tous les canaux temporels de cette trame en multiplex temporel pour la transmission d'informations associées à la liaison dans le sens allant de la station radio fixe (BS) vers les stations radio mobiles (MS).

2. Système de radiotransmission numérique selon la revendication 1, caractérisé en ce que, dans le canal de service central associé à la liaison, pour la transmission d'informations associées à la liaison dans le sens allant de la station radio fixe (BS) vers les stations radio mobiles (MS), des messages radio sont transmis pour tous les abonnés ou pour certaines populations d'abonnés du système de radiotransmission.

3. Système de radiotransmission numérique selon la revendication 1, caractérisé en ce que, pour établir chaque canal temporel de la trame en multiplex temporel pour lequel les informations de signalisation concernées sont définies dans le canal de service associé à la liaison, outre les informations de signalisation, une identification de l'usager est également transmise.
